(19) Europäisches Patentamt
European Patent Office
Office européen des brevets

(11) **EP 1 223 750 A2**

(12) **EUROPEAN PATENT APPLICATION**

(43) Date of publication:
**17.07.2002 Bulletin 2002/29**

(51) Int Cl.7: **H04N 5/232**

(21) Application number: **01130908.5**

(22) Date of filing: **27.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.12.2000 JP 2000394971**

(71) Applicant: **MATSUSHITA ELECTRIC INDUSTRIAL CO., LTD.**
**Kadoma-shi, Osaka 571-8501 (JP)**

(72) Inventors:
• **Nakagawa, Masamichi**
**Hirakata-shi, Osaka 573-0151 (JP)**

• **Okamoto, Shusaku**
**Hirakata-shi, Osaka 573-0083 (JP)**
• **Nobori, Kunio**
**Kadoma-shi, Osaka 571-0063 (JP)**
• **Ishii, Hirofumi**
**Kawasaki-shi, Kanagawa 211-0041 (JP)**
• **Morimura, Atsushi**
**Nara-shi, Nara 631-0006 (JP)**

(74) Representative: **Grünecker, Kinkeldey, Stockmair & Schwanhäusser Anwaltssozietät**
**Maximilianstrasse 58**
**80538 München (DE)**

(54) **Camera device, camera system and image processing method**

(57)    The camera device for use in measurement and synthesis of an image is capable of being used for accurate measurement and synthesis even without suppressing variation in device characteristics. A camera parameter storage means stores a camera parameter indicating characteristics unique to the camera device. A state sensing means senses a state of the camera device such as a temperature. A parameter output means externally outputs a camera parameter according to state information.

# FIG. 1

EP 1 223 750 A2

**Description**

**BACKGROUND OF THE INVENTION**

The present invention generally relates to a camera device for capturing an image. More particularly, the present invention relates to technology of a camera device for use in applications requiring an accurate image.

Conventionally, a technical field called "computer vision" is known as technology of measuring the shape, position and the like of an object captured by a camera.

For example, stereo vision technology is known in the field of computer vision. In this technology, a pair of image coordinates indicating the same position are respectively obtained from the images captured by two cameras located at different positions, whereby an actual location of that position is obtained based on the principles of triangulation.

The following technology is also known in the field of image synthesis: images captured by a plurality of cameras are modified or joined based on the positional relation between the cameras and a model of three-dimensional shape, thereby producing a wide-field synthesized image or an image as viewed from a virtual view point different from an actual camera position (see International Publication No. WO00/64175).

Such technology requires not only capturing an image but also knowing the correspondence between an object to be captured and an image. The "correspondence" herein refers to the positional relation between an object and a camera in the three-dimensional space, perspective projection for transforming a three-dimensional object into a two-dimensional projected image, sampling from the projected image to an image formed from pixels arranged two-dimensionally, or the like. Obtaining such correspondence accurately is an essential requirement to measure the position and shape of an object accurately and to join the images from a plurality of cameras without misalignment.

In order to obtain the correspondence accurately, it is required to know the camera parameters accurately. The "camera parameters" are parameters describing characteristics of a camera, and include characteristics of a lens, the relation between lens and projection plane, the position, orientation and characteristics of the camera, and the like.

The camera parameters are roughly divided into two types: external parameters; and internal parameters. The "external parameters" represent the position and orientation of a camera in the three-dimensional space. The "internal parameters" represent characteristics of an individual camera. The internal parameters include a focal length, projection center, pixel size, a lens distortion parameter, and the like.

A simple way to obtain the internal parameters is to obtain them from the specification and design drawing of the camera. The external parameters can be obtained by measuring the camera position at the installation location. In this case, however, the parameters obtained include an error resulting from manufacturing variation between individual cameras.

In order to obtain the parameters more precisely, operation called "camera calibration" must be conducted. The camera calibration is conventionally conducted by the steps of installing a camera, capturing an object (target) including many points (markers) whose three-dimensional positions are known, measuring many sets of three dimensional coordinates of a marker and corresponding image coordinates in a projected image, and estimating the camera parameters based on the sets. The estimation method is disclosed in, e.g., Matsuyama et al., "Computer vision: Gijyutsu Hyouron To Syourai Tenbou (Technical Review and Future Outlook)" (Shingijyutsu Communications, pp. 37-53, June 1998), and detailed description thereof is herein omitted.

In this camera calibration, however, a large target included in the entire field of view of the camera must be accurately positioned in a world coordinate system. This increases the device scale, and also complicates the operation.

Labor required for calibration, accuracy of the target and the like are proportional to accuracy of the camera parameters to be obtained. In a common camera calibration method, unknown camera parameters are calculated with the same accuracy. As a result, if high accuracy is required for one or more of the camera parameters to be obtained, the camera calibration as a whole is complicated accordingly.

The internal parameters are determined in the manufacturing process of a camera and its components. Therefore, the internal parameters are conventionally obtained from the design data and the like of a camera of the same model. In general, however, the design data does not reflect variation in characteristics between the individual cameras, but is based on the average values of the cameras of that model. Due to such variation in characteristics between the individual cameras, the accuracy in measurement and synthesis may not be high enough for applications like those of the computer vision.

This problem can be solved by the use of the cameras having high working accuracy and thus having little variation in characteristics. However, such cameras with high working accuracy are special as compared to the common video-capturing cameras. Therefore, the manufacturing process is complicated, resulting in increased costs.

Accuracy of the projection center indicating the positional relation between lens and CCD (Charge Coupled Device) will now be considered by way of example. The projection center is represented in pixels of the CCD. In a 1/4 CCD for capturing normal NTSC (National Television System Committee) video, the pixel size is about 0.005 mm. More specifically, in order to suppress the error of the projection center within a single pixel, the working accuracy of 0.005 mm or less is required. When the projection center is manually adjusted, the error of the projection center cannot be less than five pixels (about 0.025 mm) at present. Moreover, laborious operation by a person of skill is required to obtain accuracy of this level.

Alternatively, camera calibration for obtaining the camera parameters may be conducted before using every individual camera. As described above, however, this is not preferable in terms of the labor.

## SUMMARY OF THE INVENTION

It is an object of the present invention to provide a camera device for conducting measurement and synthesis by using a captured image, which is capable of being used for accurate measurement and synthesis even without suppressing variation in device characteristics.

More specifically, a camera device according to the present invention includes: a camera section for capturing an image; and a camera individual information storage section for storing camera individual information of the camera section based on a camera parameter including at least a camera structure parameter.

According to the present invention, regarding at least the camera structure parameter, processing can be conducted using the camera parameter of an individual camera rather than an average value such as design data. This enables accurate measurement and synthesis even if characteristics vary significantly between individual cameras.

Preferably, the camera individual information in the camera device according to the present invention is a camera parameter including at least a camera structure parameter. More preferably, the camera structure parameter includes at least a projection center of the camera section.

Also preferably, the camera individual information in the camera device according to the present invention is a mapping table describing correspondence between a pixel of a synthesized image and a pixel of the camera section which is obtained based on the camera parameter.

Further, the camera individual information storage section in the camera device according to the present invention is structured so that the camera parameter is readable from outside of the camera device.

Preferably, the camera device according to the present invention further includes an image superimposing means for superimposing the camera individual information received from the camera individual information storage section on an image received from the camera section for output.

Preferably, the camera device according to the present invention further includes a state sensing means for sensing a state of the camera device. The camera individual information storage section preferably outputs a camera individual information corresponding to the state sensed by the state sensing means. Accordingly, a camera parameter corresponding to the state of the camera device such as temperature and zoom is output, enabling measurement and synthesis with improved accuracy.

A camera system according to the present invention includes: a camera section for capturing an image; a camera individual information storage section for storing camera individual information of the camera section based on a camera parameter including at least a camera structure parameter; and an image processing section for processing an image received from the camera section, using the camera individual information received from the camera individual information storage section.

Also, a method for processing an image in a camera system having an image processing section according to the present invention, includes the steps of: inputting, when a camera device is mounted to the camera system, camera individual information stored in the camera device and based on a camera parameter into the image processing section; and processing an output image of the camera device in the image processing section based on the camera individual information.

## BRIEF DESCRIPTION OF THE DRAWINGS

FIG. **1** is a schematic block diagram showing the structure of a camera device according to a first embodiment of the present invention;

FIG. **2** shows an example of camera parameters stored in the camera device of FIG. **1**;

FIG. **3** is a schematic diagram showing the relation between the camera device and an object to be captured;

FIGS. **4A** to **4C** show examples of lens distortion;

FIG. **5** shows another example of camera parameters stored in the camera device of FIG. **1**;

FIG. **6** is a schematic diagram showing the state where the camera device is fixed;

FIGs. **7A** and **7B** are schematic diagrams illustrating influence of the camera parameters on the measurement accuracy;

FIG. **8** illustrates the operation of producing a synthesized image as viewed from a virtual viewpoint;

FIGS. **9A** and **9B** show a camera image and a synthesized image in the case of FIG. **8,** respectively;

FIG. **10** illustrates correspondence between the respective pixels of a synthesized image and a camera image;

FIGs. **11A** to **11C** show distortion in a synthesized image caused by displacement of the optical axis of a camera;

FIG. **12** illustrates an example of the operation of producing a synthesized image;

FIGs. **13A** to **13D** show distortion in a synthesized image caused by displacement of the projection center;

FIG. **14** is a block diagram of an example of the structure using a mapping table;

FIG. **15** is a block diagram of another example of the structure using a mapping table;

FIG. **16** is a flowchart illustrating the procedures from manufacturing to operation of the camera device according to the present invention;

FIG. **17** is a schematic block diagram showing the structure of a camera device according to a second embodiment of the present invention;

FIGs. **18A** and **18B** illustrate the operation of embedding camera parameters in an image;

FIG. **19** is a schematic block diagram showing the structure of a camera device according to a third embodiment of the present invention; and

FIGs. **20A** and **20B** show a camera device according to a fourth embodiment of the present invention.

## DETAILED DESCRIPTION OF THE INVENTION

(First Embodiment)

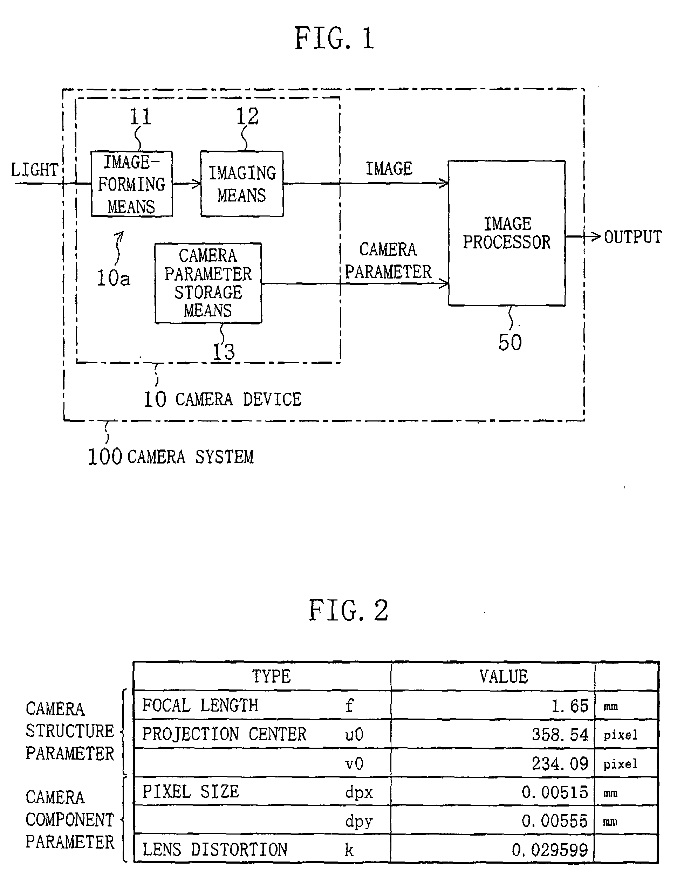

FIG. **1** is a block diagram showing an example of the basic structure of a camera device according to the first embodiment of the present invention. The camera device **10** of FIG. **1** includes an image-forming means **11** for focusing light from an object on the projection plane, an imaging means **12** for transforming the projected image into an image, and a camera parameter storage means **13** for storing camera parameters which indicate characteristics of the image-forming means **11** and the imaging means **12**, the relation therebetween, and the relation between means **11, 12** and the camera device **10** or the like. The image-forming means **11** includes a lens, a reflecting mirror and the like, and the imaging means **12** includes an imaging element such as CCD sensor. The camera parameter storage means **13** includes a memory, hard disk, and the like. The image-forming means **11** and the imaging means **12** compose a camera section **10a,** and the camera parameter storage means **13** composes a camera individual information storage section.

In the present specification, "camera individual information" means information indicating characteristics different from each other between individual cameras, that is, a camera parameter itself or information obtained based on the camera parameter. Herein, the camera parameter corresponds to the camera individual information.

By using an image and camera parameters from the camera device **10**, an image processor **50** measures, e.g., the actual distance to the object included in the image and modifies/synthesizes images from a plurality of camera devices. Then, the measured result and the synthesized image are output. For example, the output synthesized image is projected on a monitor that is separately provided. The camera device **10** and the image processor **50** compose a camera system **100**.

FIG. **2** shows an example of the camera parameters stored in the camera parameter storage means **13**. As shown in FIG. **2,** the camera parameter storage means **13** stores as camera parameters a focal length **fc**, projection center (u0, v0), pixel size (dpx, dpy) and a lens distortion parameter **k.**

As described above, the camera parameters are normally divided into internal parameters and external parameters. In addition, the camera parameters can also be divided from the standpoint of the "contour" of the camera. The camera parameters are herein divided into three types: camera component parameters; camera structure parameters; and camera contour parameters. The "camera component parameters" represent characteristics of components (CCD, lens) of a camera such as pixel size and lens distortion parameter. The "camera structure parameters" are associated with the internal structure of a camera such as the position and orientation of the lens relative to the camera contour, and the projection center and the focal length that determine the lens position relative to the CCD. The "camera contour parameters" represent the position and orientation of the camera contour in a world coordinate system.

More specifically, in the example of FIG. **2**, the focal length and the projection center are stored as camera structure parameters, and the pixel size and the lens distortion parameter are stored as camera component parameters.

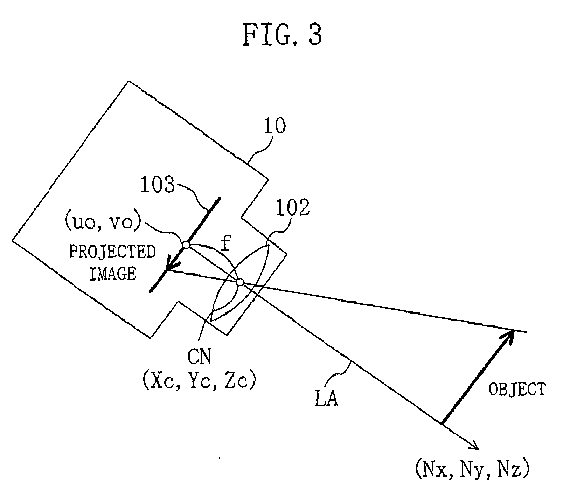

FIG. **3** is a schematic diagram showing the relation between the camera and an object to be captured. The camera parameters will now be described in connection with FIG. **3**. The object to be captured is projected on a projection plane **103** of the camera device **10** through a lens **102** as a projected image. Elements such as film and CCD are disposed on the projection plane **103**. The projected image thus obtained is optically or electrically sampled into a two-dimensional image.

In FIG. **3,** the focal length **fc,** a camera parameter indicating wide-angle, telephotographic or the like is defined as the distance between the lens center **CN** and the projection plane **103** on the optical axis **LA**. The projection center (u0, v0) corresponds to the coordinates of the point in the image on the optical axis **LA.** The pixel size (dpx, dpy) indicates the length and breadth of a single pixel of the image on the projection plane **103**. The pixel size is a camera parameter that is required to transform a pixel into coordinates on the projection plane.

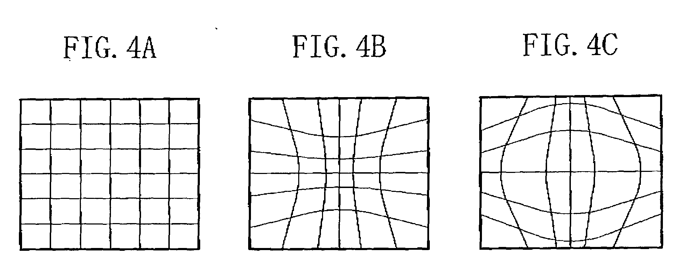

In an actual lens, the refractive index varies depending on the position in the lens, causing lens distortion. For example, it is assumed that a lattice-like object is captured. If there is no lens distortion, the resultant image is as shown in FIG. **4A.** However, if there is any lens distortion, the resultant image has bobbin-like distortion as shown in FIG. **4B** or barrel-like distortion as shown in FIG. **4C.**

Lens distortion is commonly obtained using a distortion model based on the distance from the projection center **O.** For example, provided that the two-dimensional coordinates relative to the projection center on the projection plane are (u, v), ideal coordinates (u', v') for no distortion can be given by the following equation using the lens distortion parameter **k**:

$$u' = u + ku\left(u^2 + v^2\right)$$
$$v' = v + kv\left(u^2 + v^2\right) \qquad \cdots \ (1).$$

The "pixel size" is the size of the CCD element itself, and the "lens distortion parameter" is uniquely determined from optical characteristics of the lens. Components of the camera such as CCD and lens do not require mechanical assembling. Therefore, characteristics of such components hardly vary depending on an individual product. In other words, of the camera parameters shown in FIG. **2,** the "camera component parameters" such as pixel size and lens distortion parameter hardly vary depending on an individual product.

In contrast, the "projection center" and the "focal length", which depend on the positional relation between CCD and lens, vary depending on an individual camera due to the assembling accuracy.

In other words, of the three types of camera parameters described herein, the "camera structure parameters" vary depending on an individual camera due to the accuracy in manufacturing of the camera or the like. The "camera component parameters" hardly vary depending on a camera. The "camera contour parameters" vary even in the same camera depending on the installation location of the camera. This will be described later.

The "camera structure parameters" vary depending on an individual camera, but are unique to the individual camera. The camera structure will not change once assembled. Therefore, the camera structure parameters, once measured precisely, would not change in the normal circumstances.

In view of this, according to the present invention, the "camera structure parameters", which vary depending on an individual camera, are pre-stored in the camera parameter section of the camera device so that they can be used for accurate measurement and image synthesis even without suppressing variation in characteristics between the camera devices.

The camera parameters including the camera structure parameters are obtained in advance by precise calibration. It would be very troublesome to conduct precise calibration before each use of a camera. In contrast, when precise calibration is conducted in the manufacturing process, a large number of cameras of the same type are calibrated simultaneously. Therefore, a very small amount of labor is required per camera even if an exclusive calibration system is fabricated.

In this case, variation in camera structure parameters between individual cameras need not necessarily be within a prescribed range. However, care must be taken to prevent respective characteristics of the components and positional relation therebetween from varying after manufacturing so that the camera structure parameters are fixed. It is much easier to fix the camera structure parameters after manufacturing than to manufacture the camera with high accuracy.

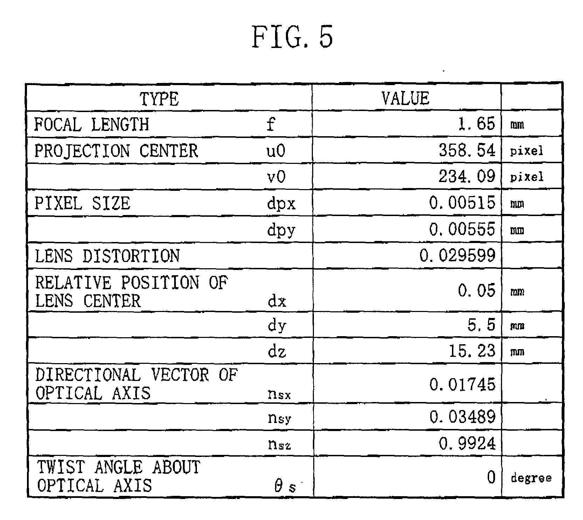

FIG. **5** shows another example of the camera parameters stored in the camera parameter storage means **13**. In the example of FIG. **5,** relative position of the lens center (dx, dy, dz), directional vector of the optical axis (nsx, nsy, nsz) and twist angle θs about the optical axis are stored in addition to the camera parameters shown in FIG. **2.**

In FIG. **3,** the camera parameter indicating the position of the camera **10** can be represented by the coordinates (Xc, Yc, Zc) of the lens center **CN.** The camera parameter indicating the orientation of the camera **10** can be represented by, e.g., the direction of the lens optical axis **LA**, (Nx, Ny, Nz), which corresponds to the straight line extending perpendicular to the projection plane **103** through the lens center **CN**. These external parameters vary depending on the installation conditions of the camera **101** and therefore must be obtained upon every installation of the camera.

The external parameters are often represented as coordinates in a so-called world coordinate system that is based on an apparatus or room having a camera mounted therein. However, since the lens is located within a housing of the camera, it is difficult to directly measure the position and orientation of the lens. Accordingly, in general, the position and orientation of the camera contour in the world coordinate system are obtained as well as information on the lens position within the camera is obtained from the design data of the camera. Thus, the position and orientation of the lens in the world coordinate system are obtained based on these information thus obtained.

In other words, the external parameters can be divided into two types: parameters indicating the relation of the camera contour with the world coordinate system; and parameters indicating the relation of the lens with the camera contour. The latter parameters belong to the "camera structure parameters" defined herein.

In the case where a camera is installed in the three-dimensional space (e.g., in the case where a camera is mounted on a vehicle), the camera is positioned and oriented based on the contour of the camera. On the other hand, the lens center and the optical axis direction as camera structure parameters vary depending on a camera contour according to, e.g., the assembling accuracy of the internal structure of the camera.

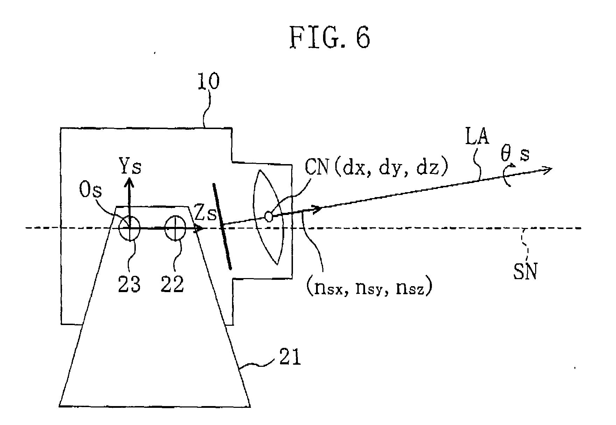

FIG. **6** schematically shows the state where the camera device **10** is fixed. As shown in FIG. **6,** the camera device **10** is herein fixed by a camera base **21** fixed in the three-dimensional space and tapped holes **22, 23.** It is assumed that the lens center **CN** and the optical axis **LA** within the camera are displaced relative to the contour of the camera device **10.** In this case, the lens center **CN** and the optical axis **LA** as camera structure parameters in the three-dimensional space vary depending on an individual camera even if the relation between the camera device **10** and the camera base **21** is fixed precisely.

Therefore, an Os-Xs-Ys-Zs coordinate system is set as a coordinate system of the camera contour. In this coordinate system, the origin **Os** corresponds to the tapped hole **23,** Z-axis corresponds to a line **SY** connecting the tapped holes **22, 23** together, Y-axis extends in the vertical direction of the camera contour, and X-axis extends in the horizontal direction thereof. In this coordinate system, the relative position of the lens center **CN** (dx, dy, dz), the directional vector of the optical axis **LA** (nsx, nsy, nsz) and the twist angle θs about the optical axis **LA** of each camera are measured and stored as camera structure parameters.

Thus, in the case where the camera device **10** is precisely fixed in the three-dimensional space, the external parameters can be precisely determined according to camera contour parameters and the camera structure parameters stored in the camera device since the camera contour parameters are fixed. This eliminates the need to calibrate the external parameters again when replacing a camera or the like.

Note that the camera parameters are not limited to those in FIGs. **2** and **5.** Any parameters that correspond to characteristics varying depending on an individual camera may be stored as camera parameters. For example, parameters such as chromatic aberration of the lens and shading distortion (which reduces brightness of the image around the lens) may be stored as camera parameters. Not all the camera parameters in FIG. **5** need be stored. For example, the pixel size (dpx, dpy) is approximately constant in some types of CCDs or the like, and is different only slightly between individual cameras. Therefore, in some cases, the pixel size need not be stored as camera parameter.

The method for representing the camera parameters is not limited to those in FIGS. **2** and **5.** For example, in the above expression (1), the lens distortion parameter is represented by the parameter **k** that is proportional to the square of the distance from the projection center. However, the lens distortion parameter may be represented as a table of the distance from the projection center and the amount of distortion (du, dv) at that distance. This method allows for more detailed description. If the distortion is not uniform in the radial direction according to the distance from the center, is can be represented as a two-dimensional table of distortion-free ideal coordinates (u', v') at each image coordinate (u, v).

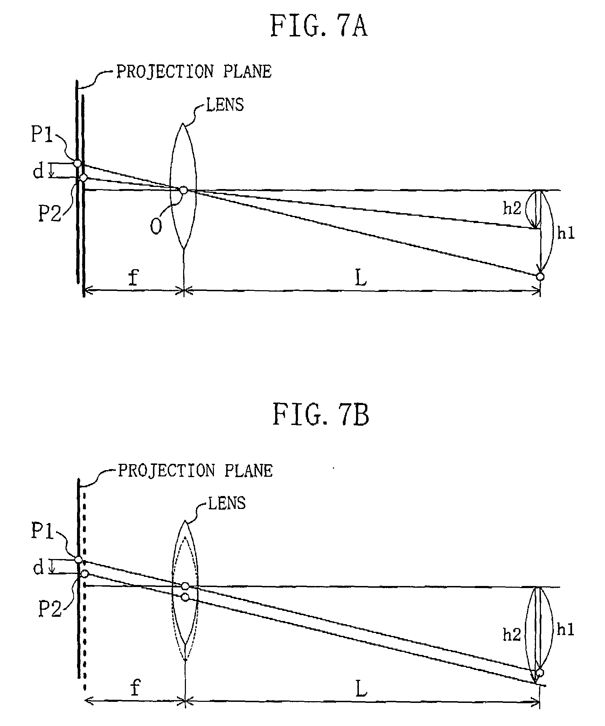

Note that accuracy of the camera parameters required for measurement and synthesis vary depending on the type of camera. Hereinafter, the difference in influence on the measurement accuracy between the projection center and the lens position will be described in connection with FIGs. **7A** and **7B.**

FIG. **7A** shows the case where the lens and the projection plane are displaced in position from each other. It is herein assumed that the projection plane is displaced in parallel by the length **d**. This corresponds to the fact that the projection center is shifted by d. The position of the lens center **0** is not shifted.

Provided that the original projection plane **P1** is shifted to **P2,** the size of an object located at a distance **L** from the lens center is calculated as "h1" on the projection plane **P1,** and "h2" on the projection plane **P2.** In other words, since the size of the object is calculated based on the projection center displaced by the length **d,** the calculation result includes an error of (h1 - h2). Provided that "f" indicates the focal length, the displacement is given by the following equation:

$$h1\text{-}h2 = (d \times L)/f \tag{2}$$

FIG. **7B** shows the case where the lens center is displaced in position. It is herein assumed that the position of the camera is displaced in parallel with the projection plane by the length **d** with the positional relation between the lens and the projection plane being fixed. In this case, an error of the size of the object located at the distance **L** from the lens center is given by the following equation:

$$h1 - h2 = d \qquad (3).$$

Provided that the parallel displacement **d** is the same, an error produced by the displacement of the projection center is L/f times that produced by the displacement of the lens center. For example, in the case where a wide-angle lens in a 1/2-inch CCD has a focal length of 3 mm and an object is located three meters away from the lens center, an error produced by the displacement of the projection center is 3000/3 = 1,000 times that produced by the displacement of the lens center.

Accordingly, although the position of the lens center may be obtained with rough accuracy, the projection center must be obtained with high accuracy, in other words, provided that the parameters which must be obtained with high accuracy such as projection center are obtained in advance, the position of the lens center may be obtained by less accurate camera calibration. Such less accurate camera calibration can be readily conducted by using, e.g., a reduced number of markers of the target. As a result, by conducing calibration according to the required accuracy, manufacturing costs can be suppressed.

The camera parameters stored in the camera parameter storage means **13** are transmitted to an image processor **50** through an interface such as a signal line. For example, the camera parameters may be output at the following timings:

(1) when the power is ON or the system is reset;
(2) when requested from the image processor **50** through a bidirectional signal line or the like;
(3) at regular intervals; and
(4) in synchronization with an image.

In the case of (2), the amount of transmission data can be reduced by requesting all the necessary types of parameters simultaneously.

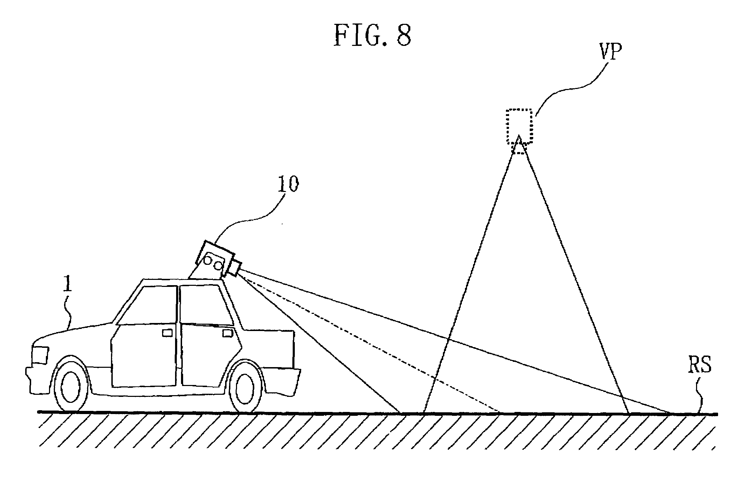

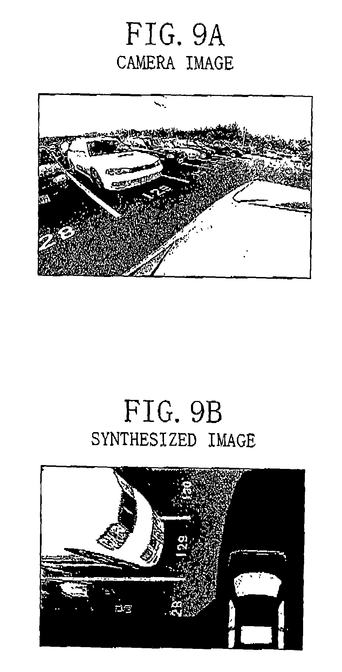

Hereinafter, an example of the operation of the image processor **50** based on an image and camera parameters will be described. FIG. **8** illustrates the operation of producing a synthesized image as viewed from a virtual viewpoint **VP.** The virtual viewpoint **VP** is located at a different position from that of the actual camera device **10.** FIGs. **9A** and **9B** show a camera image and a synthesized image, respectively. In FIG. **8,** the camera device **10** is mounted on a vehicle **1** and the virtual viewpoint **VP** is located upward behind the vehicle **1.** The synthesized image (FIG. **9B**) as viewed downward from the virtual viewpoint **VP** can be obtained by modifying the camera image (FIG. **9A**) captured by the camera device **10** based on a model of the three-dimensional shape of a road surface **RS.** Such synthesizing operation is conducted by obtaining the correspondence between the respective pixels of the synthesized image and the camera image, and setting each pixel value in the synthesized image according to a corresponding pixel value in the camera image.

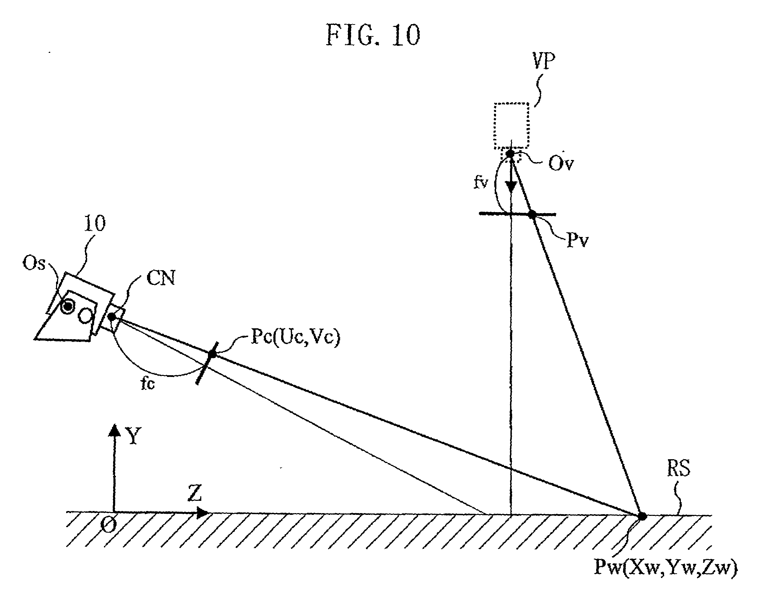

The correspondence between the respective pixels of the synthesized image and the camera image will now be described in detail in connection with FIG. **10**. In FIG. **10**, a pixel in the synthesized image corresponds to a point **Pv** on the projection plane. The projection plane is located away from the lens center **Ov** of the virtual viewpoint by a focal length **fv** in the optical axis direction. Similarly, a pixel of the actual camera corresponds to a point **Pc** on the projection plane located away from the lens center **CN** by a focal length **fc**.

Provided that the points **Pv** and **Pc** correspond to the same object, the correspondence between the points **Pv** and **Pc** can be obtained. In general, the correspondence between the points **Pv** and **Pc** can be obtained only if the position and shape of the captured object are known. For example, provided that every object captured by the camera corresponds to the plane of the road surface, the correspondence between the points **Pv** and **Pc** can be obtained only from the positional relation between the virtual camera and the actual camera and the plane of the road surface. FIG. **9B** shows a synthesized image obtained on the assumption that every object corresponds to the plane of the road surface. In FIG. **10,** the point **Pv** of the virtual viewpoint and the point **Pc** of the actual camera are mapped with each other through the point **Pw** on the plane of the road surface.

Hereinafter, the procedures for obtaining the point **Pc** (Uc, Vc) on the projection plane of the actual camera from the point **Pw** (Xw, Yw, Zw) on the plane of the road surface will be described.

The point **Pc** of the actual camera is defined with a coordinate system based on the lens within the camera. The coordinate system of the lens is associated with a world coordinate system defining the point **Pw** through the camera contour. Accordingly, the point **Pw** is transformed into the point **Pc** in two stages: the coordinates of the point **Pw** in the world coordinate system are first transformed into those in the Os-Xs-Ys-Zs coordinate system of the camera contour; and the coordinates thus obtained are then transformed into those in the coordinate system of a camera (inside the camera) such as lens center. The coordinate system of the camera contour may be defined as a coordinate system based on a tapped hole as shown in FIG. **6.**

Provided that the point **Pw** has coordinates (xs, ys, zs) in the coordinate system of the camera contour, the former transformation is given by the following equation:

$$\begin{bmatrix} xs \\ ys \\ zs \end{bmatrix} = Rsw^{-1} \left( \begin{bmatrix} Xw \\ Yw \\ Zw \end{bmatrix} - \begin{bmatrix} Txs \\ Tys \\ Tzs \end{bmatrix} \right) \qquad \cdots \ (4)$$

where (Txs, Tys, Tzs) indicates the origin of the coordinate system of the camera contour in the world coordinate system, and Rsw is a rotation matrix for mapping the coordinate system of the camera contour with the world coordinate system. Rsw can be calculated from the orientation of the camera contour.

Provided that the point **Pw** has coordinates (xc, yc, zc) in the coordinate system inside the camera, the latter transformation is given by the following equation:

$$\begin{bmatrix} xc \\ yc \\ zc \end{bmatrix} = Rcs^{-1} \left( \begin{bmatrix} xs \\ ys \\ zs \end{bmatrix} - \begin{bmatrix} dx \\ dy \\ dz \end{bmatrix} \right) \qquad \cdots \ (5)$$

where (dx, dy, dz) indicates the relative position of the lens center shown in FIG. **5,** and Rcs is a rotation matrix for mapping the coordinate system inside the camera with the coordinate system of the camera contour. By using the directional vector (nsx, nsy, nsz) of the optical axis in FIG. **5**, Rcs is given by the following equation:

$$Rcs = \begin{bmatrix} \dfrac{l}{m}\cos\theta s & -\dfrac{nsz}{l}\sin\theta s - \dfrac{nsx \bullet nsy}{l \bullet m}\cos\theta s & \dfrac{nsy}{l}\sin\theta s - \dfrac{nsz \bullet nsx}{l \bullet m}\cos\theta s \\ \dfrac{l}{m}\sin\theta s & \dfrac{nsz}{l}\cos\theta s - \dfrac{nsx \bullet nsy}{l \bullet m}\sin\theta s & -\dfrac{nsy}{l}\cos\theta s - \dfrac{nsz \bullet nsx}{l \bullet m}\sin\theta s \\ n & & \\ \dfrac{nsx}{m} & \dfrac{nsy}{m} & \dfrac{nsz}{m} \end{bmatrix} \quad \cdots \ (6)$$

where $l=\sqrt{nsy^2+nsz^2}$, $m=\sqrt{nsx^2 + nsy^2 nsz^2}$.

Accordingly, from the above equations (4) and (5), the point **Pw** on the road surface can be transformed from the coordinates in world coordinate system into those in the coordinate system of the viewpoint of the actual camera.

The point **Pc** (Uc, Vc) on the projection plane is obtained as follows by perspective projection transformation using the focal length **fc** of the actual camera:

$$Uc = xc\dfrac{fc}{zc}$$
$$Vc = yc\dfrac{fc}{zc} \qquad \cdots \ (7)$$

where (Uc, Vc) is represented based on the actual size on the projection plane. The coordinate value (Uc, Vc) can be transformed into (u', v') in the pixel coordinate system as follows by using the camera parameters, i.e., the pixel size (dpx, dpy) and the projection center (U0, V0):

$$u' = Uc / dpx + U0$$
$$v' = Vc / dpy + V0 \qquad \cdots \ (8).$$

The pixel coordinate value (u, v) of the actual camera is then obtained by transforming the coordinate value (u', v') using the lens distortion parameter.

Provided such transformation is conducted using the fixed values rather than the camera parameters of FIG. **5** that vary depending on a camera, variation in structure between the cameras will not be reflected in the transformation from the coordinates of the camera contour into those inside the camera as given by the above equation (5) and in the transformation into the pixel value as given by the above equation (8). As a result, the pixels in the synthesized image do not correctly correspond to those of the actual camera due to such variation in structure between the cameras, producing distortion in the synthesized image.

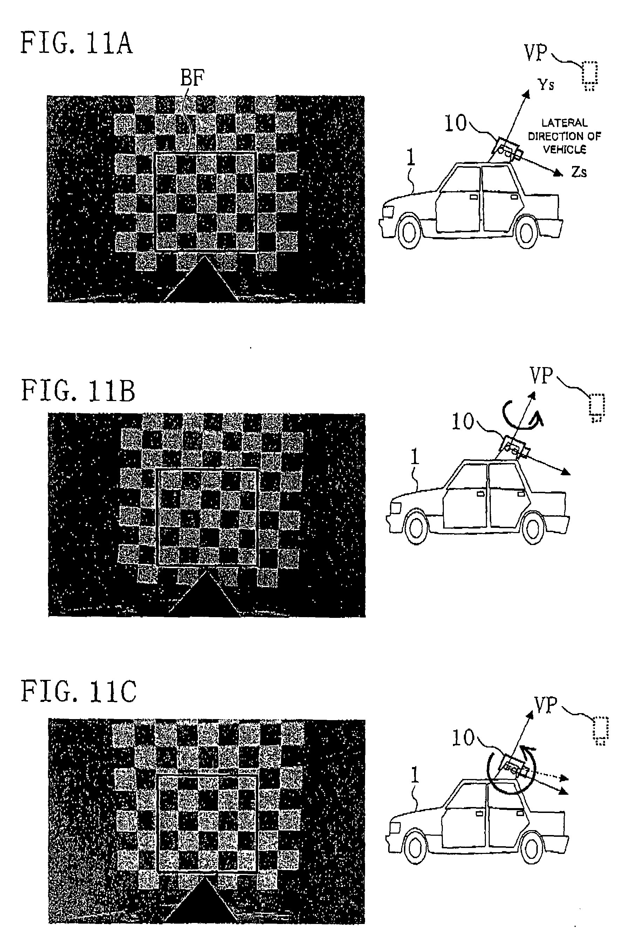

FIGs. **11A** to **11C** show distortion in a synthesized image caused by displacement of the optical axis of the camera. In FIGs. **11A** to **11C,** a black-and-white checkerboard placed on the road surface is captured by an actual camera from the oblique direction, and a synthesized image is produced from the image captured by the actual camera. The synthesized image is herein an image as viewed vertically downward from a virtual viewpoint located higher ahead of the camera. In FIGS. **11A** to **11C,** the black frame **BF** is a marker representing a 5-by-5 grid region calculated from the position of the virtual viewpoint. In the case where the camera is mounted on a vehicle, graphics like black frame **BF** is sometimes superimposed on the image as a reference for knowing the distance, direction and the like on the road surface. Such graphics can be calculated only from the parameters of the virtual viewpoint. If the parameters of the actual camera are accurate, the graphics matches the synthesized image (checkerboard in Figs. **11A** to **11C).**

FIG. **11A** shows a synthesized image resulting from the synthesizing operation using the camera parameters of an actually used camera. With reference to FIG. **11A,** the virtual viewpoint is preset so that the viewing direction from the virtual viewpoint is vertical to the road surface and the lines of the grid in the checkerboard extend in the vertical direction of the image. Accordingly, the squares of the checkerboard are correctly viewed as squares arranged in order.

FIG. **11B** shows a synthesized image in the case where the directional vector of the optical axis has been displaced twice about the Ys-axis. Such displacement may be produced when variation between individual cameras is not reflected in the camera parameters used in the synthesizing operation. In this case, since the position and orientation of the virtual viewpoint are the same as those in FIG. **11A,** the black frame **BF** is located at the same position in the image. However, since the synthesizing operation is conducted with reference to the displaced coordinates of the actual camera, the checkerboard in the synthesized image is distorted. For example, even if the virtual viewpoint is preset such that the vertical direction of the image corresponds to the longitudinal direction of the vehicle, the longitudinal direction would be tilted in the synthesized image. Accordingly, the driver may possibly make a mistake when the synthesized image is presented for driving support.

FIG. **11C** shows a synthesized image in the case where the directional vector of the optical axis has been displaced twice about the xs-axis. In this case, the square checkerboard is distorted in the synthesized image. Accordingly, the synthesized image, when presented for driving support, may possibly give a false impression to the driver. In other words, the driver may possibly mistake the flat road surface for a sloping one.

Such distortion of the synthesized image can be readily eliminated by storing the camera parameters of each camera in each camera device for use in the synthesizing operation, as in the present invention.

Of the camera structure parameters, the projection center is important particularly when the image synthesis is conducted using the camera device of the present invention.

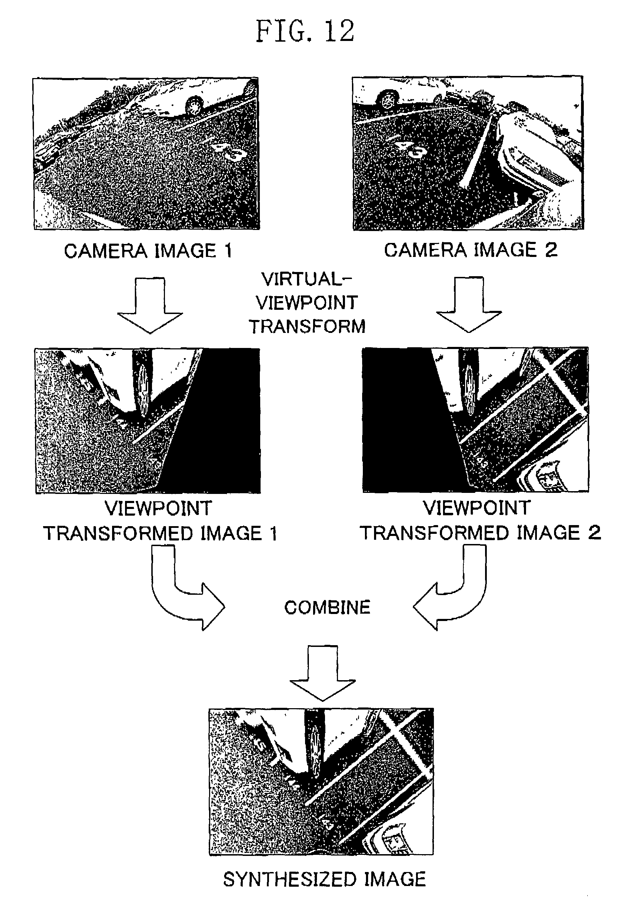

FIG. **12** shows a synthesized image obtained based on the virtual viewpoint. Camera images **1, 2** from two cameras (right and left cameras mounted at the rear of the vehicle) are transformed into images as viewed from a common virtual viewpoint, i.e., virtual-viewpoint transformed images **1, 2.** These virtual-viewpoint transformed images **1, 2** are then combined into a synthesized image having a wide field of view. It can be seen from FIG. **12** that the right and left camera images are joined at the center without causing misalignment of the white lines in these images.

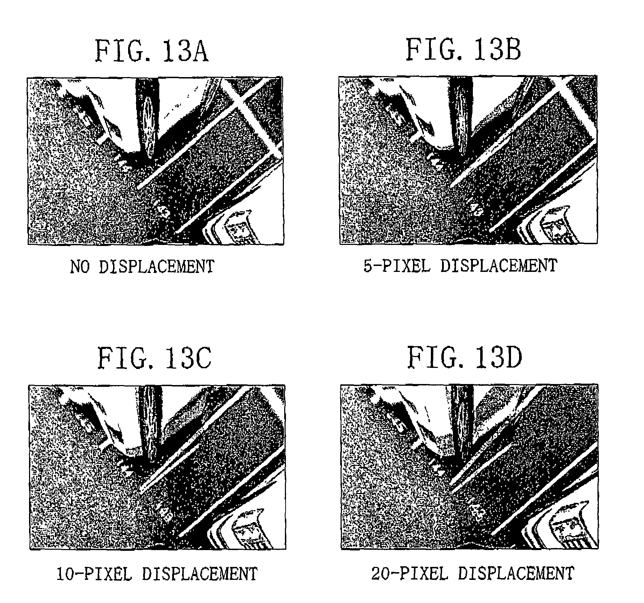

FIGS. **13A** to **13D** illustrate how the synthesized image of FIG. **12** is distorted when one of the camera structure parameters, the projection center, is displaced. FIG. **13A** shows a synthesized image obtained using a correct value of the projection center (i.e., no displacement). FIG. **13B** corresponds to five-pixel displacement of the projection center. FIG. **13C** corresponds to ten-pixel displacement of the projection center. FIG. **13D** corresponds to twenty-pixel displacement of the projection center.

Referring to FIG. **13B,** the white lines are slightly misaligned at the joint (center) of the camera images. This means that only five-pixel displacement (which corresponds to 0.025 mm in a 1/4 CCD) affects the synthesized image. In FIG. **13C**, the white lines are misaligned more clearly. In FIG. **13D**, the upper right white line that exists in the other figures disappears, resulting in an extremely distorted image.

The twenty-pixel distortion corresponds to displacement of 0.1 mm in the 1/4 CCD, which is not problematic in terms of the working accuracy of a camera used exclusively for image projection. As can be seen from FIGS. **13A** to **13D,** however, the twenty-pixel displacement may cause serious problems when the camera image is used for image synthesis. Even displacement of about five pixels produces visible distortion.

Although such variation in projection center may be suppressed by improving the working accuracy, this requires very troublesome operation. However, even if the projection center is displaced, an undistorted synthesized image as shown in FIG. **13A** can be produced if an accurate position of the displaced projection center of each camera is known. In other words, by pre-storing the projection center, one of the camera structure parameters, in a camera device, an undistorted synthesized image can be produced without requiring so much labor in the manufacturing process.

[Use of Mapping Table]

As described above, in order to produce a synthesized image as viewed from the virtual viewpoint, correspondence between the respective pixels of the synchronized image and the actual camera must be obtained. The use of a table of two-dimensional arrangement describing such correspondence enables high-speed processing. This table is called "mapping table".

In the mapping table, an identification (ID) number of a corresponding actual camera and a coordinate value of a corresponding pixel of the camera are described in each of the elements corresponding to the respective pixels of the synthesized image. Moreover, the mixture ratio of the pixels of the cameras is described in an element corresponding to two or more camera images.

Hereinafter, an embodiment using the mapping table will be described.

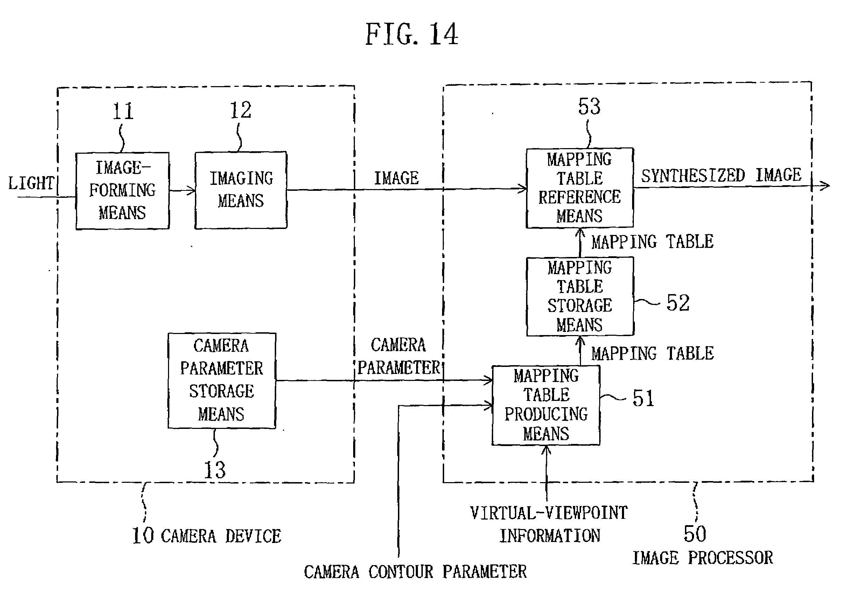

FIG. **14** is a block diagram showing the structure of the embodiment using the mapping table. In FIG. **14,** components common to FIG. **1** are denoted with the same reference numerals as those of FIG. **1**. A mapping table producing means **51** receives the information on a visual viewpoint (e.g., position, orientation and focal distance). By using the camera parameters of an actual camera and the camera contour parameters, the mapping table producing means **51** then produces a mapping table describing the correspondence between the respective pixels of the virtual viewpoint and a synthesized image. For example, when a road surface projection model is used, the correspondence may be calculated by performing the above expressions (4) to (8) and calculating the coordinates on the road surface plane from the pixels of the virtual viewpoint. This mapping table need only be produced when the virtual viewpoint is changed or when the installation position of the camera and thus the camera contour parameters are changed. In other words, the mapping table need not be produced for every synthesized image.

Note that the camera contour parameters themselves may be stored in the image processor **50** or the camera device **10**. This eliminates the need to recalculate the camera contour parameters when only the virtual viewpoint is changed.

The mapping table thus produced is stored in a mapping table storage means **52.** A plurality of mapping tables may be stored for switching between a plurality of virtual viewpoints.

A mapping table reference means **53** reads a mapping table corresponding to a current virtual viewpoint from the mapping table storage means **52**. Every time the synthesizing operation is conducted, pixel values of a synthesized image are calculated with reference to the camera ID number and the coordinate values of a corresponding actual camera described in the corresponding elements of the mapping table. As a result, the image synthesizing operation can be conducted only with reference to the mapping table, i.e., without conducting geometric calculation, enabling high-speed processing.

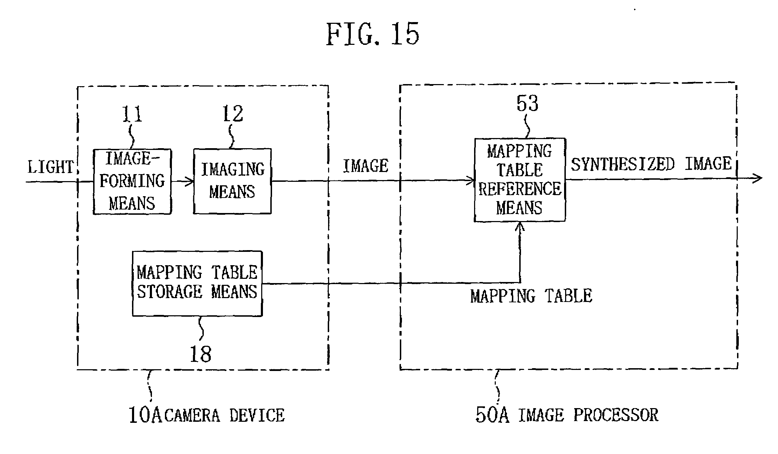

If it is clearly known that the camera device is used for such image synthesis, and only several virtual viewpoints and several installation positions of the camera are used, the structure of FIG. **15** is possible.

In the structure of FIG. **15**, a mapping table is stored in a mapping table storage means **18** of a camera device **10A.** A mapping table reference means **53** in an image processor **50A** refers to the mapping table read from the camera device **10A.** The mapping table storage means **18** composes a camera individual information storage section, and the mapping table corresponds to camera individual information.

If the virtual viewpoint and the camera position are limited, only several types of camera parameters and camera contour parameters will be required. Therefore, a required mapping table may be estimated and produced in advance for storage in the camera device **10A.** The mapping table reference means **53** need only read a corresponding mapping table from the mapping table storage means **18** based on the information on a current installation position of the camera and a current virtual viewpoint.

[From Manufacturing to operation of Camera]

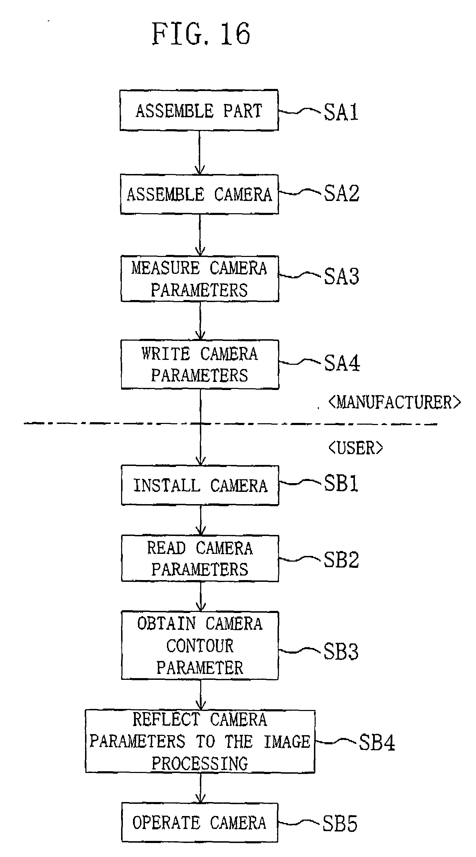

The procedures from manufacturing to operation of a camera device according to the present invention will now be described briefly with reference to FIG. **16.**

First, steps **SA1** to **SA4** are first conducted at, e.g., a camera manufacturing factory. In step **SA1,** each component such as CCD, lens and camera housing is assembled. In step **SA2**, the components are assembled into a camera, and the positional relation therebetween is fixed. Conventionally, the CCD and the lens must be positioned with extremely high accuracy in these steps. However, such high positioning accuracy is not required according to the present invention.

In step **SA3,** camera parameters including camera structure parameters are measured by camera calibration using a target. In step **SA4,** the camera parameters thus obtained are stored in the camera parameter storage means **13** of the camera device **10.**

Thereafter, steps **SB1** to **SB5** are conducted in, e.g., an automobile manufacturing factory. In step **SB1,** the camera device is mounted on, e.g., a vehicle. In step **SB2,** the camera parameters stored in the camera parameter storage means **13** of the thus mounted camera device is read. In step **SB13**, the camera contour parameters indicating the positional relation of the camera contour with respect to the vehicle and the place thus set are obtained by calibration or the like. Then, in step **SB4,** setting is conducted so that all of the camera parameters are reflected to the image processing. Thereafter, the camera device is operated for performing measurement and image synthesis which reflect the camera parameters in individual cameras.

In case where the installation position of the camera to the vehicle is fixed and the sufficient accuracy is ensured, only the fixed camera contour parameters are used in step **SB3,** which necessitates no individual processing such as calibration. If replacement of the camera becomes necessary due to an accident, it is necessary in a conventional one to perform calibration again after the camera replacement. In this case, however, the camera can be operated only by automatically conducting steps **SB1** to **SB4** at system reset after the camera replacement, without operation such as calibration.

(Second Embodiment)

In the first embodiment, an interface such as a signal line is required to transmit the camera parameters to the image processor **50.** For example, however, when the camera device **10** is located away from the image processor **50,** it is sometimes difficult to provide an additional signal line therebetween. The present embodiment eliminates the need for a signal line for transmitting the camera parameters.

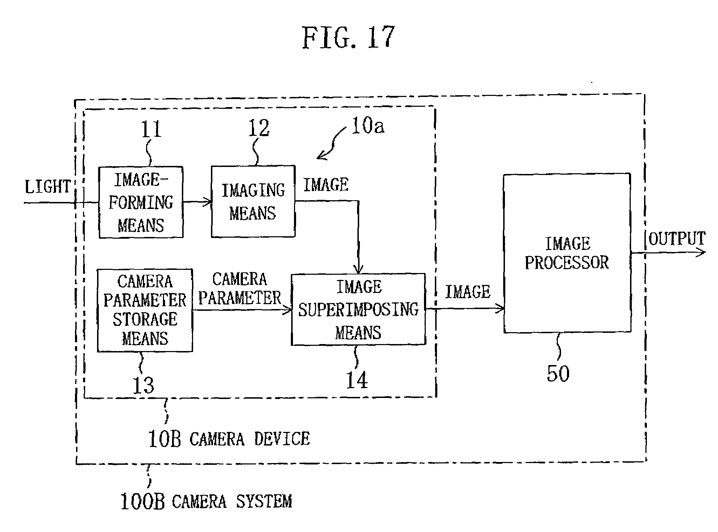

FIG. **17** is a block diagram showing the structure of a camera device according to the second embodiment of the present invention. In FIG. **17,** components common to FIG. **1** are denoted with the same reference numerals as those in FIG. **1**. An image superimposing means **14** embeds the camera parameters output from the camera parameter storage means **13** in the image output from the imaging means **12**, and outputs an image including information on the camera parameters to the image processor **50.** The camera device **10B** and the image processor **50** compose a camera system **100B,**

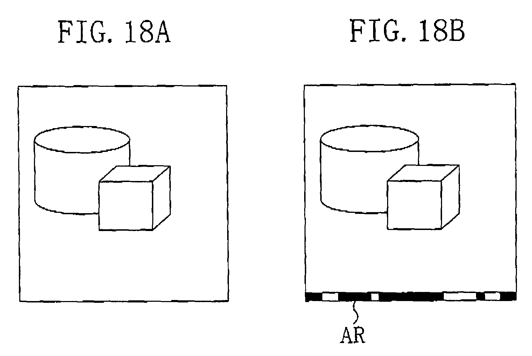

Operation of embedding the camera parameters in an image signal will now be described with reference to FIGs. 18A and **18B.** FIG. **18A** shows an example of the image output from the imaging means **12.** FIG. **18B** shows the image of FIG. **18A** having the camera parameters embedded therein. In FIG. **18B,** binary camera parameters are embedded in a region **AR** of the image. In the binary camera parameters, "1" indicates white and "0" indicates black. For example, a single scanning line of the image may be divided into ninety equal sections. The brightness of each section is represented by 1 bit on a binary basis (i.e., black or white). Thus, 90-bit information can be added per scanning line.

The image processor **50** captures an image signal and transforms it into two-dimensional pixel arrangement. Provided that the captured image signal is transformed into arrangement having the width of 720 pixels, each section of the region **AR** corresponds to eight pixels. The camera parameters can be restored by binarizing some of the eight pixels located in the center in view of the offset upon A-D (analog-to-digital) conversion. If the signal is degraded due to encoding or the like, a scanning line may be divided into a reduced number of sections, or a plurality of scanning lines may be used together. For example, representing eleven types of camera parameters by a 32-bit floating point would result in 352-bit data in total. Accordingly, by using four scanning lines, the camera parameters can be embedded in the image.

Note that the method for embedding the camera parameters in the image is not limited to that described above. Another method may be used such as embedding the camera parameters in blanking of an image signal or in a color signal, or dispersing the camera parameters across the whole image by using electronic watermark technology. The camera parameters may be embedded in every image. Alternatively, the camera parameters may be embedded in the images at regular time intervals. If the camera parameters have a large amount of data, a set of a camera parameter value and an identifier indicating the type of camera parameter may be sequentially embedded in every image, so that the camera parameters are output from a plurality of images.

Thus, according to the present embodiment, an image having the camera parameters superimposed thereon are output, thereby eliminating the need to provide an additional signal line for transmitting the camera parameters. In other words, the camera parameters can be transmitted through an existing image transmission path. The present embodiment is effective when it is difficult to provide an additional signal line between the camera device and the image processor such as when radio transmission is conducted.

Note that, in the structure of FIG. **1**, the camera parameter storage means **13** may be structured so that the camera parameters are readable from the outside of the camera device **10**. For example, the camera parameter storage means **13** may be formed from a bar-cord, a magnetic tape or the like. In this case, the image processor **50** may additionally include a means for reading the bar-code or the magnetic tape, so that the camera parameters can be read upon installation or replacement of the camera. This eliminates the need for a signal line for transmitting the camera parameters, and also the need to superimpose the camera parameters on the image.

(Third Embodiment)

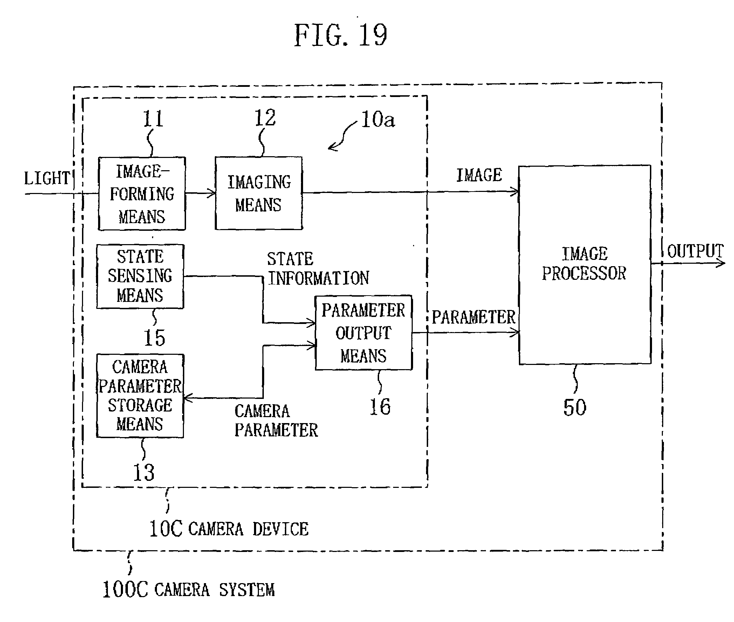

FIG. **19** is a block diagram showing the structure of a camera device according to the third embodiment of the present invention. In FIG. **19,** components common to FIG. **1** are denoted with the same reference numerals as those of FIG. **1.** A state sensing means **15** senses the state of the camera device **10C** that varies depending on the situations, such as the temperature and aperture of the camera device **10C,** focus state, and zoom state if a zoom lens is used as the image-forming means **11**, and outputs the sensed state as state information. The state information is not constant in each camera, but varies depending on the circumstances of the camera device **10C,** operation by the user, and the like. A parameter output means **16** outputs a camera parameter from the camera parameter storage means **13** according to the state sensed by the state sensing means **15**. The camera parameter storage means **13** and the parameter output means **16** compose a camera individual information storage section. The camera device **10C** and the image processor **50** compose a camera system **100C.**

The camera parameter values may vary depending on the state of the camera device **10C.** For example, parameters such as lens distortion parameter, focal length and projection center would vary if the lens is deformed due to temperature change. Parameters such as focal length and projection center would vary if the magnifying power of the lens is changed. Moreover, parameters such as focal length and projection center would vary if the focus is changed.

Regarding each type of camera parameter, the camera parameter storage means **13** of the present embodiment stores a plurality of values according to the state of the camera device **10C** rather than a single value. For example, the camera parameter storage means **13** may store parameter values such as lens distortion parameter **k**, focal length **f** and projection center (u0, v0) for every five degrees in temperature. Regarding the magnifying power of the zoom lens as well, the camera parameter storage means **13** stores a plurality of sets of camera parameters such as focal length **f** according to the position of the operating portion of the zoom lens. Note that, in the case where a camera with a replaceable lens is used rather than a camera integrating a zoom lens, the camera parameter storage means **13** stores the camera parameters according to the type of lens.

According to the state information received from the state sensing means **15**, the parameter output means **16** reads from the camera parameter storage means **13** the camera parameters corresponding to the current state for output.

As has been described above, according to the present embodiment, the camera device **10C** outputs the camera parameters according to its state, so that the image processor **50** can conduct the processing using optimal camera parameters according to the state. This allows for improved processing accuracy.

Note that the camera parameter storage means **13** may store the camera parameters represented as functions of the state of the camera, such as interpolation formulas. This enables reduction in the number of camera parameters to be stored.

In addition to the camera parameters, the state information itself may be output. This enables the image processor **50** to use the state information such as aperture and temperature of the camera device **10C** in the later processing.

(Fourth Embodiment)

The structure including a plurality of imaging systems will be described in the fourth embodiment of the present invention. In order to measure the distance by the stereo vision using a plurality of imaging systems or to synthesize the images from a plurality of cameras, accuracy in the positional relation between the cameras is an important factor for measurement accuracy and quality of the synthesized image. In this case, by incorporating a plurality of lenses and a plurality of CCDs into a single housing, the positional relation between the cameras is fixed in the manufacturing process. In this case, the camera parameters are stored in the camera device together with those indicating the positional relation between the cameras. This enables accurate measurement and image synthesis reflecting variation in manufacturing accuracy between the individual cameras.

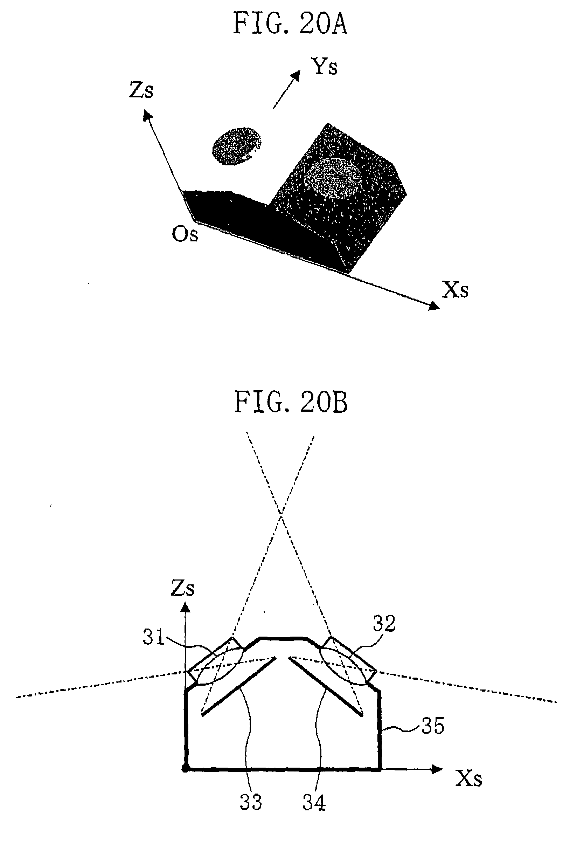

FIGS. **20A** and **20B** show a camera device according to the fourth embodiment of the present invention. FIG. **20A** schematically shows the contour of the camera device, and FIG. **20B** schematically shows the internal structure thereof. In FIGs. **20A** and **20B,** lenses **31, 32** and corresponding CCDs **33, 34** are arranged in a single housing **35,** and the positional relation therebetween is fixed in the manufacturing process. The lens **31** and the CCD **33** compose a first imaging system, and the lens **32** and the CCD **34** compose a second imaging system.

An Oe-Xs-Ys-Zs coordinate system fixed to the contour of the camera is estimated. For each of the first and second imaging systems, the position of the lens center, orientation of the optical axis, and the like are represented in the Os-Xs-Ys-Zs coordinate system. The parameters thus obtained are used as camera parameters indicating the positional relation between the imaging systems. Storing these parameters together with the internal parameters (such as focal length, center of the image, pixel size, and lens distortion parameter) enables accurate measurement and synthesis reflecting variation between individual cameras.

As has been described above, according to the present invention, the camera parameters corresponding to an individual camera device are stored therein, whereby accurate measurement and synthesis can be realized even if the camera device is not manufactured with extremely high accuracy.

**Claims**

1. A camera device, comprising:

   a camera section for capturing an image; and
   a camera individual information storage section for storing camera individual information of the camera section based on a camera parameter including at least a camera structure parameter.

2. The camera device according to claim 1, wherein the camera individual information is a camera parameter including at least a camera structure parameter.

3. The camera device according to claim 2, wherein the camera structure parameter includes at least a projection center of the camera section.

4. The camera device according to Claim 1, wherein the camera individual information is a mapping table describing correspondence between a pixel of a synthesized image and a pixel of the camera section which is obtained based on the camera parameter.

5. The camera device according to Claim 1, wherein the camera individual information storage section is structured so that the camera parameter is readable from outside of the camera device.

6. The camera device according to claim 1, further comprising an image superimposing means for superimposing the camera individual information received from the camera individual information storage section on an image received from the camera section for output.

7. The camera device according to claim 1, further comprising a state sensing means for sensing a state of the camera device, wherein the camera individual information storage section outputs camera individual information corresponding to the state sensed by the state sensing means.

8. A camera system comprising:

   a camera section for capturing an image;
   a camera individual information storage section for storing camera individual information of the camera section based on a camera parameter including at least a camera structure parameter; and
   an image processing section for processing an image received from the camera section, using the camera individual information received from the camera individual information storage section.

9. A method for processing an image in a camera system having an image processing section, comprising the steps of:

   inputting, when a camera device is mounted to the camera system, camera individual information stored in the camera device and based on a camera parameter into the image processing section; and
   processing an output image of the camera device in the image processing section based on the camera individual information.

# FIG. 1

IMAGE-FORMING MEANS — 11

IMAGING MEANS — 12

CAMERA PARAMETER STORAGE MEANS — 13

LIGHT → IMAGE-FORMING MEANS → IMAGING MEANS → IMAGE → IMAGE PROCESSOR → OUTPUT

CAMERA PARAMETER STORAGE MEANS → CAMERA PARAMETER → IMAGE PROCESSOR

10a

IMAGE PROCESSOR — 50

10 CAMERA DEVICE

100 CAMERA SYSTEM

# FIG. 2

|  | TYPE |  | VALUE |  |
|---|---|---|---|---|
| CAMERA STRUCTURE PARAMETER | FOCAL LENGTH | f | 1.65 | mm |
|  | PROJECTION CENTER | u0 | 358.54 | pixel |
|  |  | v0 | 234.09 | pixel |
| CAMERA COMPONENT PARAMETER | PIXEL SIZE | dpx | 0.00515 | mm |
|  |  | dpy | 0.00555 | mm |
|  | LENS DISTORTION | k | 0.029599 |  |

FIG. 3

FIG. 4A    FIG. 4B    FIG. 4C

# FIG. 5

| TYPE | | VALUE | |
|---|---|---|---|
| FOCAL LENGTH | f | 1. 65 | mm |
| PROJECTION CENTER | u0 | 358. 54 | pixel |
| | v0 | 234. 09 | pixel |
| PIXEL SIZE | dpx | 0. 00515 | mm |
| | dpy | 0. 00555 | mm |
| LENS DISTORTION | | 0. 029599 | |
| RELATIVE POSITION OF LENS CENTER | dx | 0. 05 | mm |
| | dy | 5. 5 | mm |
| | dz | 15. 23 | mm |
| DIRECTIONAL VECTOR OF OPTICAL AXIS | nsx | 0. 01745 | |
| | nsy | 0. 03489 | |
| | nsz | 0. 9924 | |
| TWIST ANGLE ABOUT OPTICAL AXIS | $\theta s$ | 0 | degree |

# FIG. 6

## FIG. 7A

## FIG. 7B

FIG. 8

EP 1 223 750 A2

## FIG. 9A
CAMERA IMAGE

## FIG. 9B
SYNTHESIZED IMAGE

FIG. 10

## FIG. 11A

## FIG. 11B

## FIG. 11C

# FIG. 12

CAMERA IMAGE 1

CAMERA IMAGE 2

VIRTUAL-
VIEWPOINT
TRANSFORM

VIEWPOINT
TRANSFORMED IMAGE 1

VIEWPOINT
TRANSFORMED IMAGE 2

COMBINE

SYNTHESIZED IMAGE

## FIG. 13A

NO DISPLACEMENT

## FIG. 13B

5-PIXEL DISPLACEMENT

## FIG. 13C

10-PIXEL DISPLACEMENT

## FIG. 13D

20-PIXEL DISPLACEMENT

FIG. 14

LIGHT → IMAGE-FORMING MEANS (11) → IMAGING MEANS (12) → IMAGE

CAMERA PARAMETER STORAGE MEANS (13)

10 CAMERA DEVICE

CAMERA PARAMETER

SYNTHESIZED IMAGE ← MAPPING TABLE REFERENCE MEANS (53) ← MAPPING TABLE ← MAPPING TABLE STORAGE MEANS (52) ← MAPPING TABLE ← MAPPING TABLE PRODUCING MEANS (51)

VIRTUAL-VIEWPOINT INFORMATION

CAMERA CONTOUR PARAMETER

IMAGE PROCESSOR 50

FIG. 15

LIGHT → IMAGE-FORMING MEANS (11) → IMAGING MEANS (12) → IMAGE → MAPPING TABLE REFERENCE MEANS (53) → SYNTHESIZED IMAGE

MAPPING TABLE STORAGE MEANS (18) → MAPPING TABLE

10A CAMERA DEVICE

50A IMAGE PROCESSOR

EP 1 223 750 A2

# FIG. 16

```
        ┌─────────────────┐
        │  ASSEMBLE PART  │──── SA1
        └─────────────────┘
                 │
                 ▼
        ┌─────────────────┐
        │ ASSEMBLE CAMERA │──── SA2
        └─────────────────┘
                 │
                 ▼
        ┌─────────────────┐
        │ MEASURE CAMERA  │──── SA3
        │   PARAMETERS    │
        └─────────────────┘
                 │
                 ▼
        ┌─────────────────┐
        │  WRITE CAMERA   │──── SA4
        │   PARAMETERS    │
        └─────────────────┘
```

<MANUFACTURER>
─·─·─·─·─·─·─·─·─·─·─·─·─·─·─·─·─·─·─·─·─·─·─·─
<USER>

```
                 │
                 ▼
        ┌─────────────────┐
        │ INSTALL CAMERA  │──── SB1
        └─────────────────┘
                 │
                 ▼
        ┌─────────────────┐
        │   READ CAMERA   │──── SB2
        │   PARAMETERS    │
        └─────────────────┘
                 │
                 ▼
        ┌─────────────────┐
        │  OBTAIN CAMERA  │
        │     CONTOUR     │──── SB3
        │    PARAMETER    │
        └─────────────────┘
                 │
                 ▼
   ┌──────────────────────────┐
   │     REFLECT CAMERA       │
   │ PARAMETERS TO THE IMAGE  │──── SB4
   │       PROCESSING         │
   └──────────────────────────┘
                 │
                 ▼
        ┌─────────────────┐
        │ OPERATE CAMERA  │──── SB5
        └─────────────────┘
```

# FIG. 17

EP 1 223 750 A2

FIG. 18A

FIG. 18B

AR

FIG. 19

EP 1 223 750 A2

# FIG. 20A

# FIG. 20B